(19) Europäisches Patentamt
European Patent Office
Office européen des brevets

(11) **EP 1 699 150 B1**

(12) **FASCICULE DE BREVET EUROPEEN**

(45) Date de publication et mention
de la délivrance du brevet:
**22.07.2009 Bulletin 2009/30**

(51) Int Cl.:
***H04B 10/18*** (2006.01)

(21) Numéro de dépôt: **06290331.5**

(22) Date de dépôt: **28.02.2006**

(54) **Dispositif de régénération optique d'impulsions, installation comprenant un tel dispositif et utilisation de ce dispositif**

Vorrichtung zur Regeneration von optischen Impulsen, System mit dieser Vorrichtung und Verwendung dieser Vorrichtung

Device for regenerating optical pulses, system comprising such a device and use of this device

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.03.2005 FR 0502125**

(43) Date de publication de la demande:
**06.09.2006 Bulletin 2006/36**

(73) Titulaire: **FRANCE TELECOM**
**75015 Paris (FR)**

(72) Inventeur: **Pincemin, Erwan**
**22290 Gommenec'h (FR)**

(74) Mandataire: **Santarelli**
**14, avenue de la Grande Armée**
**B.P. 237**
**75822 Paris Cedex 17 (FR)**

(56) Documents cités:
- DANY B ET AL: "Numerical study of long-haul 1610 Gbit/s soliton transmission using dispersion management and narrowband filtering" ELECTRONICS LETTERS, IEE STEVENAGE, GB, vol. 34, no. 21, 15 octobre 1998 (1998-10-15), pages 2053-2054, XP006010440 ISSN: 0013-5194
- ATKINSON D ET AL: "INCREASED AMPLIFIER SPACING IN A SOLITON SYSTEM WITH QUANTUM-WELL SATURABLE ABSORBERS AND SPECTRAL FILTERING" OPTICS LETTERS, OSA, OPTICAL SOCIETY OF AMERICA, WASHINGTON, DC, US, vol. 19, no. 19, 1 octobre 1994 (1994-10-01), pages 1514-1516, XP000466523 ISSN: 0146-9592
- KUMASAKO J ET AL: "LINEAR STABILITY ANALYSIS OF DISPERSION-MANAGED SOLITONS CONTROLLEDBY FILTERS" JOURNAL OF LIGHTWAVE TECHNOLOGY, IEEE SERVICE CENTER, NEW YORK, NY, US, vol. 18, no. 8, août 2000 (2000-08), pages 1064-1068, XP000989385 ISSN: 0733-8724

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un dispositif de régénération optique d'impulsions, une installation comprenant un tel dispositif et une utilisation de ce dispositif.

Plus précisément, l'invention concerne la régénération d'impulsions solitons gérées en dispersion transmises sur une fibre optique. Les impulsions solitons gérées en dispersion sont aussi appelées impulsions solitons DM (de l'anglais "Dispersion-Managed solitons").

Les impulsions solitons DM ont la propriété de se propager périodiquement sans déformation en milieu non-linéaire, puisque ces impulsions particulières sont solution de l'équation de Schrödinger non-linéaire. L'accumulation d'un bruit d'émission spontanée amplifiée, notamment généré par des amplificateurs optiques disposés à intervalles réguliers sur la fibre optique, vient cependant perturber la propagation de ces impulsions en générant des fluctuations d'intensité et une gigue temporelle (dite de Gordon-Haus). Les collisions entre impulsions solitons DM appartenant à différents canaux de la fibre optique sont également une source de gigue (dite de collision)

Au cours de la propagation des impulsions dans la fibre optique, sous l'influence des divers effets perturbateurs, leur profil temporel et spectral ainsi que leur positionnement temporel et spectral sont modifiés, d'où la nécessité de réaliser une régénération optique.

On connaît déjà dans l'état de la technique un dispositif de régénération optique d'impulsions, comportant un filtre passe-bandes optique adapté pour la synchronisation temporelle et la stabilisation d'intensité des impulsions, notamment d'après le document intitulé "Linear Stability Analysis of Dispersion-Managed Solitons Controlled by Filters", de J. Kumasako et M. Matsumoto, extrait du Journal of Lightwave Technology, volume 18, n° 8, août 2000.

Le réglage du filtre s'effectue en agissant sur sa fréquence centrale et sur sa largeur. L'utilisation d'un filtre passe-bandes permet, d'une part, une synchronisation temporelle des impulsions en les recentrant sur la fréquence centrale du filtre, et d'autre part, une stabilisation d'intensité de ces impulsions en filtrant les fréquences extrêmes du spectre des impulsions, qui sont apparues au cours de leur propagation.

Pour que le filtre soit efficace, il doit être suffisamment étroit pour limiter la largeur spectrale d'une impulsion et pour supprimer le bruit. Cependant, si le filtre est trop étroit, il risque de modifier la forme optimale de l'impulsion au risque de la déstabiliser et de perturber sa propagation dans la fibre optique. Le choix de la largeur spectrale du filtre résulte donc d'un compromis.

Du fait que le filtre utilisé ne peut pas être trop étroit, le filtre est inefficace pour supprimer le bruit d'émission spontanée amplifiée. Par conséquent, le dispositif de régénération de l'état de la technique est inefficace pour supprimer ce bruit qui a donc tendance à s'accumuler au cours de la transmission des impulsions dans la fibre optique. Ceci est particulièrement vrai dans une ligne multiplexée en longueur d'onde.

L'invention vise à fournir un dispositif de régénération optique d'impulsions que l'on peut régler facilement et précisément pour assurer à la fois une synchronisation temporelle, une stabilisation d'intensité et une suppression de bruit des impulsions transmises.

A cet effet, l'invention a pour objet un dispositif de régénération optique d'impulsions comportant un filtre passe-bandes optique adapté pour la synchronisation temporelle et la stabilisation d'intensité d'impulsions solitons gérées en dispersion, caractérisé en ce qu'il comprend en outre des moyens de suppression de bruit, distincts du filtre passe-bandes.

Ainsi, les moyens de suppression de bruit étant distincts du filtre passe-bandes, on peut régler indépendamment le filtre, pour optimiser ses fonctions de synchronisation temporelle et de stabilisation d'intensité des impulsions, et les moyens de suppression de bruit.

Selon un mode de réalisation particulier, les moyens de suppression de bruit comportent un absorbant saturable, pour la suppression de bruit d'émission spontanée amplifiée.

L'utilisation d'un absorbant saturable en combinaison avec un filtre optique permet d'obtenir un dispositif de régénération optique entièrement passif. Un tel dispositif de régénération est particulièrement avantageux pour des applications transocéaniques dans lesquelles une alimentation en énergie électrique doit être limitée au strict minimum en raison de sa difficulté de mise en oeuvre.

On peut également utiliser un miroir en boucle optique non-linéaire (de l'anglais Non-linear Optical Loop Miror) ou une fibre hautement non-linéaire comme moyens de suppression de bruit d'émission spontanée amplifiée étant donné que leur fonction de transfert est semblable à celle de l'absorbant saturable. De préférence, la fonction de transfert des moyens de suppression de bruit est une fonction de transfert en marche d'escalier.

De façon optionnelle, la fonction de transfert du filtre a sensiblement un profil gaussien ou sinus. En effet, comme les impulsions solitons sont des impulsions de profil sensiblement gaussien, leur spectre a un profil gaussien. Il est donc avantageux que la fonction de transfert du filtre soit la plus proche possible du spectre des impulsions pour ne pas les déstabiliser. Les filtres sinus et les filtres gaussien ont des profils très proches. On peut donc utiliser indifféremment un filtre gaussien ou un filtre sinus pour régénérer les impulsions solitons DM.

Selon un mode de réalisation particulier, la largeur fréquentielle à mi-hauteur du filtre est sensiblement égale à deux fois la largeur fréquentielle à mi-hauteur des impulsions solitons gérées en dispersion à régénérer. Ce paramétrage du filtre permet de filtrer suffisamment les impulsions sans pour autant déstabiliser leur propagation.

De façon optionnelle, le filtre passe-bandes est adapté pour laisser passer une pluralité de bandes de fréquences distinctes prédéfinies et séparées deux à deux par une bande de fréquences atténuées par le filtre, de manière à filtrer simultanément une pluralité d'impulsions multiplexées en fréquence dans un signal optique.

Il est alors possible de filtrer un signal comportant plusieurs canaux multiplexés en fréquence sans avoir à effectuer d'opérations de démultiplexage et de re-multiplexage puisqu'un tel dispositif régénère simultanément tous les canaux du signal.

Avantageusement, le filtre est périodique en fréquence.

En effet, il est courant que les fréquences de multiplexage utilisées soient séparées deux à deux d'un même intervalle de fréquence.

Selon un mode de réalisation particulier, on prendra un filtre périodique dont la profondeur de modulation est comprise entre 0,5 et 4dB, de préférence entre 1 et 4dB et/ou dont la profondeur de modulation est comprise entre 10% et 60% de la hauteur fréquentielle des impulsions à régénérer. Cette valeur de la profondeur de modulation permet d'obtenir re-synchronisation temporelle satisfaisante des impulsions ainsi qu'une suppression du bruit d'amplitude efficace sans déstabiliser pour autant les impulsions solitons DM.

Un filtre de type Fabry-Perot est un exemple de filtre passe-bandes périodique en fréquence pouvant être utilisé dans le dispositif de l'invention.

L'invention a également pour objet une installation de transmission optique d'impulsions solitons gérées en dispersion, comportant des moyens de propagation d'impulsions optiques, **caractérisée en ce qu'**elle comporte un dispositif de régénération optique des impulsions tel que précédemment défini, inséré dans les moyens de propagation.

Avantageusement, le dispositif de régénération est inséré dans les moyens de propagation au voisinage d'un point où la largeur spectrale des impulsions atteint un maximum.

En effet, au cours de la propagation des impulsions, sous l'influence des effets non-linéaires, leur spectre a tendance à s'élargir. Par conséquent, le filtre ayant pour fonction de redonner à ces impulsions leur spectre initial, il est avantageux de les filtrer en un point

où leur élargissement est maximal.

Selon un mode de réalisation particulier, les moyens de propagation d'impulsions optiques comportant des premiers moyens de propagation à dispersion anormale et des seconds moyens de propagation à dispersion normale, les moyens de propagation d'impulsions optiques sont adaptés pour que les impulsions atteignent une largeur spectrale maximale au voisinage du milieu des premiers moyens de propagation.

L'invention a également pour objet l'utilisation d'un dispositif selon l'invention pour la régénération d'impulsions solitons gérées en dispersion.

L'invention sera mieux comprise à l'aide de la description qui va suivre donnée uniquement à titre d'exemple et faite en se référant aux dessins annexés dans lesquels :

- la figure 1 représente schématiquement la structure générale d'une installation de transmission optique d'impulsions selon l'invention ;
- la figure 2 illustre, à l'aide de diagrammes, l'évolution de la largeur temporelle et de la largeur spectrale d'une impulsion transmise par l'installation de la figure 1 ;
- la figure 3 représente schématiquement la fonction de transfert d'un filtre passe-bandes périodique d'un dispositif de régénération optique d'impulsions selon un mode de réalisation possible de l'invention ;
- les figures 4 et 5 sont des graphiques représentant les profils fréquentiels de filtres gaussiens adaptés pour filtrer un signal comprenant neuf canaux multiplexés ; et
- la figure 6 est un graphique représentant le profil fréquentiel d'un filtre sinus adapté pour filtrer un signal comprenant neuf canaux multiplexés.

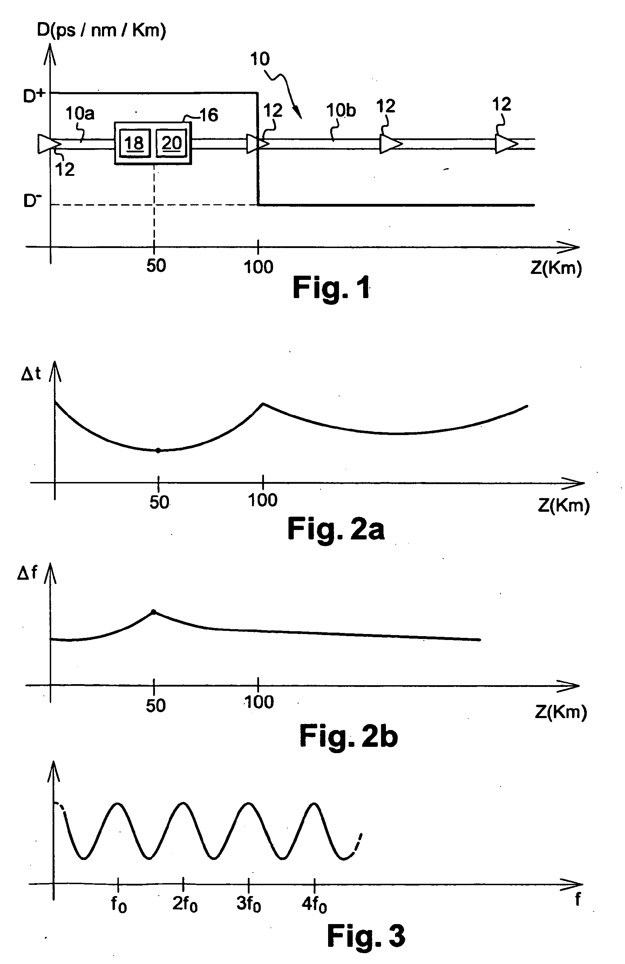

L'installation de transmission optique représentée sur la figure 1 comporte une fibre de ligne 10 formant moyens de propagation d'un signal optique.

Le signal optique considéré est composé d'une pluralité de canaux multiplexés en fréquence. Les fréquences de multiplexage sont des multiples d'une fréquence $f_0$.

Chaque canal est composé d'impulsions de type solitons DM. Ces impulsions sont utilisées pour des applications de transmission optique à très haut débit, par exemple des transmissions à 40 Gbit/s ou davantage. On désigne par « temps-bit » la période de transmission des impulsions. La largeur temporelle à mi-hauteur des impulsions solitons DM est généralement de l'ordre de la moitié du temps-bit.

La fibre de ligne 10 comporte une première portion 10a remplissant une fonction de moyens de propagation à dispersion anormale, dont le coefficient de dispersion $D^+$ est par exemple égal à 2,55 ps/nm/km. Cette première portion de fibre 10a à dispersion anormale est prolongée par une seconde portion de fibre 10b à dispersion normale, dont le coefficient de dispersion $D^-$ est égal à -2,45 ps/nm/km. Les première et seconde portions de fibre 10a et 10b ont par exemple chacune une longueur de 100 km.

Le schéma de la figure 1 peut être reproduit périodiquement pour fournir une fibre de ligne 10 de longueur nettement supérieure, notamment une fibre de ligne permettant des transmissions transocéaniques.

L'installation de transmission optique comprend également des amplificateurs optiques 12 insérés à intervalles réguliers dans la fibre de ligne 10. Ces amplificateurs sont à l'origine du bruit d'émission spontanée amplifiée perturbant les impulsions. Ce bruit se traduit par l'apparition de fréquences perturbatrices régulièrement réparties dans le spectre des impulsions.

Une impulsion soliton DM comporte en général plusieurs composantes de fréquences différentes du fait de sa largeur temporelle. Or, l'indice de réfraction de la fibre optique varie en fonction de la fréquence, et la vitesse de propagation d'une impulsion sur une fibre dépend de l'indice de réfraction de la fibre. Par conséquent, les différentes composantes de l'impulsion sont transmises sur la fibre de ligne 10 à des vitesses différentes et la largeur temporelle de l'impulsion varie au cours de sa propagation dans la fibre de ligne 10. On parle d'effets dispersifs linéaires.

Outre les effets dispersifs linéaires, l'impulsion subit également des effets non-linéaires comme l'auto-modulation de phase. Ces effets provoquent des variations de la largeur spectrale de l'impulsion.

Au cours de leur transmission dans la fibre de ligne 10, les impulsions subissent donc des déformations et ont besoin d'être régénérées à intervalles réguliers.

Un dispositif 16 de régénération optique est inséré dans la fibre de ligne 10. Il comprend un filtre passe-bandes 18 ainsi qu'un absorbant saturable 20. Le filtre passe-bandes est adapté pour la synchronisation temporelle et la stabilisation de l'intensité d'impulsions solitons DM, en supprimant les fréquences extrêmes du spectre pour recentrer l'impulsion sur sa fréquence initiale. Pour que le filtrage des solitons DM ne déstabilise pas leur transmission, la fonction de transfert du filtre a sensiblement un profil gaussien ou sinus. L'absorbant saturable constitue des moyens de suppression de bruit.

La figure 2a est un graphique représentant la largeur temporelle d'une impulsion en fonction de sa propagation dans la fibre de ligne 10. En fonction du coefficient de dispersion de la fibre de ligne 10, la largeur temporelle d'une impulsion augmente ou diminue, ce qui provoque des battements de l'impulsion. La largeur temporelle de l'impulsion atteint des minimums locaux au milieu de la première portion de fibre 10a et au milieu de la seconde portion de fibre 10b.

Les effets non-linéaires provoquent des variations de la largeur spectrale de l'impulsion comme représenté sur la figure 2b. Dans l'exemple de la figure 1, la largeur spectrale atteint un maximum sensiblement au milieu de la première portion de fibre 10a.

Le dispositif 16 de régénération optique est donc de préférence inséré au voisinage du milieu de la première portion de fibre 10a, là où la largeur spectrale atteint ce maximum.

Le filtre passe-bandes 18 est par exemple un filtre optique périodique de Fabry-Pérot, dont le profil fréquentiel est représenté sur la figure 3. Il est constitué par la répétition périodique d'un motif prédéfini. Chaque motif est destiné à filtrer l'un des canaux du signal transmis sur la fibre de ligne 10. A cet effet, chaque motif est centré sur une fréquence multiple de la fréquence $f_0$ de multiplexage des canaux.

Le réglage du filtre est réalisé en ajustant le profil du motif périodique, ce qui agit sur la profondeur de modulation du filtre. La profondeur de modulation caractérise la sélectivité du filtre. Une profondeur de modulation élevée signifie que le filtre ne laisse passer que des bandes de fréquences très étroites et qu'il atténue fortement les bandes de fréquences intermédiaires. Une profondeur de modulation faible signifie que le filtre laisse passer des bandes de fréquences larges, et que les fréquences intermédiaires ne sont que légèrement atténuées.

Le filtre de l'invention a de préférence une profondeur de modulation modérée. En effet, la profondeur de modulation du filtre ne doit pas être trop faible afin d'obtenir les effets de synchronisation temporelle et de stabilisation en amplitude recherchés, ni trop forte pour ne pas trop modifier le profil des impulsions, et perturber leur propagation.

Par exemple, la largeur fréquentielle à mi-hauteur d'un des motifs du filtre périodique est réglée de manière à être égale à environ deux fois la largeur fréquentielle à mi-hauteur du signal, au point où se trouve le filtre. Plus précisément, on prendra un filtre périodique dont la profondeur de modulation est comprise entre 0,5 et 4dB et/ou dont la profondeur de modulation est comprise entre 10% et 60% de la hauteur fréquentielle des impulsions à régénérer.

Comme la profondeur de modulation ne peut pas être trop forte, le filtre périodique ne supprime pas efficacement les fréquences perturbatrices, intercalées entre les fréquences de multiplexage, qui sont dues au bruit d'amplification spontanée amplifiée. L'absorbant saturable 20 a donc pour rôle de supprimer ce bruit d'amplification spontanée amplifiée en ne laissant passer que les signaux dont l'amplitude est au moins égale à un seuil minimum prédéterminé.

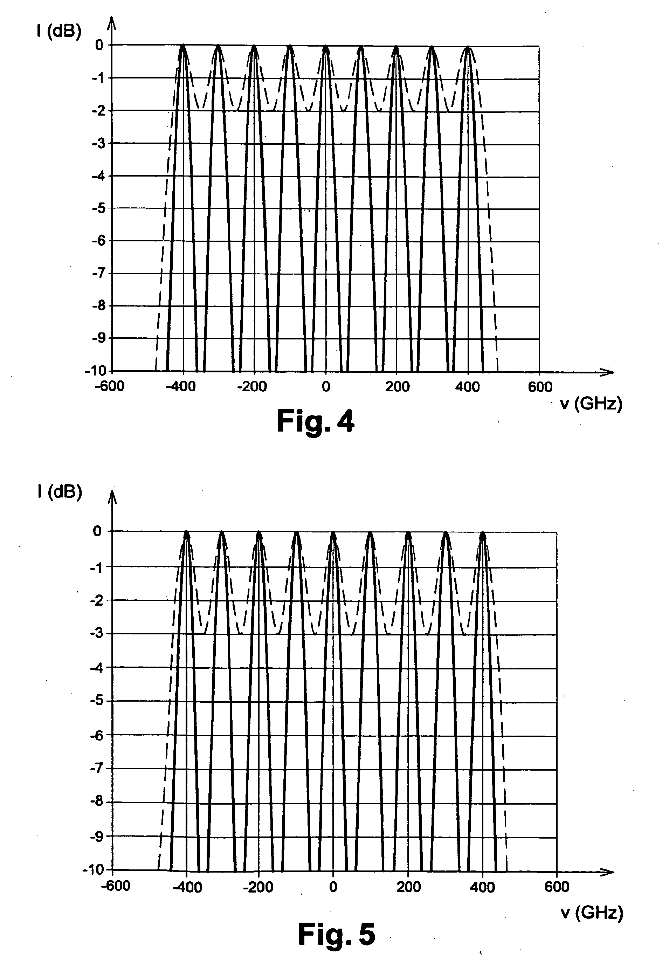

A titre d'exemple, on a représenté en trait plein sur les figures 4, 5 et 6 le profil spectral d'un signal transmis sur la fibre optique 10 et comprenant neuf canaux multiplexés en fréquence espacés deux à deux de 100GHz (c'est-à-dire de 0.8 nm). Les informations transmises sur chaque canal sont codées selon un format de codage RZ 50% (format Retour à Zéro dont le rapport de cycle des impulsions est égal à 50%) à 40Gbits/s. On rappelle que le rapport de cycle d'une impulsion est égal à la largeur à mi-hauteur de l'impulsion divisée par le temps-bit.

Comme à 40Gbits/s le temps-bit est égal à 25 picosecondes (ps) et que le rapport de cycle est de 50%, la largeur à mi-hauteur d'une impulsion est de 12.5 ps. On considère par la suite la largeur $T_0$ à $1/\exp(1)$ d'une impulsion.

Dans l'exemple décrit, To = 7.5070 ps.

La formule mathématique du profil en intensité du filtre 18 périodique de l'invention est alors la suivante dans le cas où le filtre a un profil gaussien.

$$I_{gauss}(v)=I_{gauss1}(v) + I_{gauss2}(v) + I_{gauss3}(v) + I_{gauss4}(v) + I_{gauss5}(v) + I_{gauss6}(v) + I_{gauss7}(v) +$$
$$I_{gauss8}(v) + I_{gauss9}(v)$$

Avec:

$I_{gauss1}(v)= exp^2 (-4*\pi^{2*}v^{2*}P^2/2),$
$I_{gauss2}(V)= exp^2 (-4*\pi^{2*}(v-100)^{2*}P^2/2),$
$I_{gauss3}(V)= exp^2 (-4*\pi^{2*}(v-200)^{2*}P^2/2),$
$I_{gauss4}(V)= exp^2 (-4*\pi^{2*}(v-300)^{2*}P^2/2),$
$I_{gauss5}(V)= exp^2 (-4*\pi^{2*}(v-400)^{2*}P^2/2),$
$I_{gauss6}(V)= exp^2 (-4*\pi^{2*}(v+100)^{2*}P^2/2),$
$I_{gauss7}(v)= exp^2 (-4*\pi^{2*}(v+200)^{2*}P^2/2),$
$I_{gauss8}(v)= exp^2 (-4*\pi^{2*}(v+300)^{2*}P^2/2),$
$I_{gauss9}(v)= exp^2 (-4*\pi^{2*}(v+400)^{2*}P^2/2),$
où v est la fréquence en GHz et exp est la fonction exponentielle.

Le paramètre du filtre gaussien (noté P) est choisi de telle manière que la largeur à mi-hauteur d'un motif du filtre gaussien 18 soit égale à deux fois la largeur spectrale à mi-hauteur des impulsions gaussiennes constituant les canaux.

On a représenté en trait discontinu respectivement sur les figures 4 et 5 la réponse en intensité du filtre gaussien périodique 18 pour des valeurs de P égales à To/2.20*1e-3 et à To/2.00*1 e-3, ce qui correspond à des profondeurs de modulation respectives de 2dB et 3dB. Pour obtenir une profondeur de modulation de 4 dB, on prend une valeur de P égale à To/1.86*1 e-3.

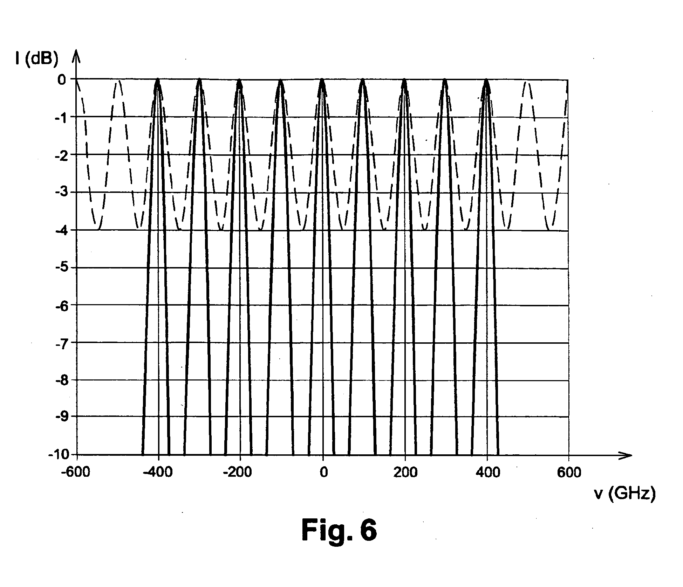

Sur la figure 6, on a représenté en trait discontinu la réponse en intensité d'un filtre sinus périodique 18 de profondeur de modulation égale à 4dB.

La formule mathématique du profil en intensité du filtre 18 sinus périodique de l'invention est la suivante.

$$I_{sinus}(v) = (1- M) + M * sin^2(2*\pi*(v+50)/200),$$

où le paramètre M permet de régler la profondeur de modulation du filtre sinus. Dans l'exemple ci-dessus, la période du filtre est de 100 GHz, espacement spectral entre les canaux de transmission. Pour obtenir des profondeurs de modulation respectivement égales à 2dB, 3dB et 4dB, on prend des valeurs de M égales à 0.365, 0.5 et 0.6.

L'invention ne se limite pas au mode de réalisation précédemment décrit. En effet, on peut utiliser comme moyens de suppression de bruit tout dispositif optique dont la fonction de transfert a sensiblement une forme de marche (comme celle d'un absorbant saturable) de manière à supprimer tous les signaux dont l'intensité maximale est inférieure à une intensité seuil et à laisser passer les signaux dont l'intensité maximale dépasse l'intensité seuil.

Par exemple, on peut utiliser un miroir en boucle optique non-linéaire.

On peut également utiliser une fibre hautement non-linéaire dont les effets physiques tels que l'auto-modulation de phase ou la modulation de phase croisée permettent d'obtenir la fonction de transfert voulue.

Il apparaît clairement qu'un dispositif de régénération optique tel que décrit précédemment (c'est-à-dire associant un filtre gaussien ou sinus périodique et un absorbant saturable) permet la régénération optique d'impulsions solitons DM de manière entièrement passive et en régénérant éventuellement simultanément tous les canaux multiplexés d'un même signal.

**Revendications**

1. Dispositif (16) de régénération optique d'impulsions, comportant un filtre (18) passe-bandes optique adapté pour la synchronisation temporelle et la stabilisation d'intensité d'impulsions solitons gérées en dispersion, le filtre passe-bandes (18) étant adapté pour laisser passer une pluralité de bandes de fréquences distinctes prédéfinies et séparées deux à deux par une bande de fréquences atténuées par le filtre, de manière à filtrer simultanément une pluralité d'impulsions multiplexées en fréquence dans un signal optique, **caractérisé en ce qu'**il comprend en outre des moyens (20) de suppression de bruit, distincts du filtre passe-bandes (18) et **en ce que** le filtre passe-bande (18) a une faible profondeur de modulation comprise entre 10% et 60% de la hauteur fréquentielle des impulsions à régénérer.

2. Dispositif (16) de régénération optique selon la revendication 1, dans lequel la profondeur de modulation du filtre (18) est comprise entre 0,5 et 4dB, de préférence entre 1 et 4dB.

3. Dispositif (16) de régénération optique selon l'une quelconque des revendications 1 à 2, dans lequel les moyens (20) de suppression de bruit comportent un absorbant saturable (20), pour la suppression de bruit d'émission spontanée amplifiée.

4. Dispositif (16) de régénération optique selon l'une quelconque des revendications 1 à 2, dans lequel les moyens (20) de suppression de bruit comportent un miroir en boucle optique non-linéaire, pour la suppression de bruit d'émission spontanée amplifiée.

5. Dispositif (16) de régénération optique selon l'une quelconque des revendications 1 à 2, dans lequel les moyens (20) de suppression de bruit comportent une fibre hautement non-linéaire, pour la suppression de bruit d'émission spontanée amplifiée.

6. Dispositif (16) de régénération optique selon l'une quelconque des revendications 1 à 5, dans lequel la fonction de transfert du filtre (18) a sensiblement un profil gaussien ou sinus.

7. Dispositif (16) de régénération optique selon la revendication 6, dans lequel la largeur fréquentielle à mi-hauteur du filtre (18) est sensiblement égale à deux fois la largeur fréquentielle à mi-hauteur des impulsions à régénérer.

8. Dispositif (16) de régénération optique selon l'une quelconque des revendications 1 à 7, dans lequel le filtre est périodique en fréquence.

9. Dispositif (16) de régénération optique selon la revendication 8, dans lequel le filtre est un filtre de type Fabry-Perot.

10. Installation de transmission optique d'impulsions solitons gérées en dispersion, comportant des moyens (10) de propagation d'impulsions optiques, **caractérisée en ce qu'**elle comporte un dispositif (16) de régénération optique des impulsions selon l'une quelconque des revendications 1 à 9, inséré dans les moyens de propagation (10).

11. Installation de transmission optique selon la revendication 10, dans laquelle le dispositif de régénération (16) est inséré dans les moyens de propagation (10) au voisinage d'un point où la largeur spectrale des impulsions atteint un maximum.

12. Installation de transmission optique selon la revendication 11, dans laquelle les moyens (10) de propagation d'impulsions optiques comportant des premiers moyens (10a) de propagation à dispersion anormale et des seconds moyens (10b) de propagation à dispersion normale, les moyens (10) de propagation d'impulsions optiques sont adaptés pour que les impulsions atteignent une largeur spectrale maximale au voisinage du milieu des premiers moyens de propagation.

13. Utilisation d'un dispositif (16) selon l'une quelconque des revendications 1 à 9, pour la régénération d'impulsions solitons gérées en dispersion.

**Claims**

1. Optical pulse regeneration device (16), comprising an optical bandpass filter (18) suitable for the time synchronization and intensity stabilization of dispersion-managed soliton pulses, the bandpass filter (18) being suitable to allow the passage of a plurality of distinct frequency bands, predefined and separated in pairs by a frequency band attenuated by the filter, so as to simultaneously filter a plurality of frequency-multiplexed pulses in an optical signal, **characterized in that** it also comprises noise suppression means (20), distinct from the bandpass filter (18), and **in that** the bandpass filter (18) has a low modulation depth of between 10% and 60% of the frequency height of the pulses to be regenerated.

2. Optical regeneration device (16) according to Claim 1, in which the modulation depth of the filter (18) is between 0.5 and 4dB, preferably between 1 and 4dB.

3. Optical regeneration device (16) according to either of Claims 1 or 2, in which the noise suppression means (20) comprise a saturable absorbent (20), for the suppression of amplified spontaneous transmission noise.

4. Optical regeneration device (16) according to either of Claims 1 or 2, in which the noise suppression means (20) comprise a non-linear optical loop mirror, for the suppression of amplified spontaneous transmission noise.

5. Optical regeneration device (16) according to either of Claims 1 or 2, in which the noise suppression means (20) comprise a highly non-linear fibre, for the suppression of amplified spontaneous transmission noise.

6. Optical regeneration device (16) according to any one of Claims 1 to 5, in which the transfer function of the filter (18) has a substantially Gaussian or sinusoidal profile.

7. Optical regeneration device (16) according to Claim 6, in which the frequency width at mid-height of the filter (18) is substantially equal to twice the frequency width at mid-height of the pulses to be regenerated.

8. Optical regeneration device (16) according to any one of Claims 1 to 7, in which the filter is periodic in frequency.

9. Optical regeneration device (16) according to Claim 8, in which the filter is a Fabry-Perot-type filter.

10. Installation for the optical transmission of dispersion-managed soliton pulses, comprising optical pulse propagation means (10), **characterized in that** it comprises an optical pulse regeneration device (16) according to any one of Claims 1 to 9, inserted in the propagation means (10).

11. Optical transmission installation according to Claim 10, in which the regeneration device (16) is inserted in the propagation means (10) in the vicinity of a point where the spectral width of the pulses reaches a maximum.

12. Optical transmission installation according to Claim 11, in which, the optical pulse propagation means (10) comprising first propagation means (10a) with abnormal dispersion and second propagation means (10b) with normal dispersion, the optical pulse propagation means (10) are adapted for the pulses to reach a maximum spectral width in the vicinity of the centre of the first propagation means.

13. Use of a device (16) according to any one of Claims 1 to 9, for the regeneration of dispersion-managed soliton pulses.

**Patentansprüche**

1. Vorrichtung (16) zur optischen Regenerierung von Impulsen, die ein optisches Bandpassfilter (18) aufweist, das für die zeitliche Synchronisation und die Intensitätsstabilisierung von Dispersions-gemanagten Solitonen-Impulsen geeignet ist, wobei das Bandpassfilter (18) geeignet ist, mehrere unterschiedliche vordefinierte und paarweise von einem Bereich von durch das Filter gedämpften Frequenzen getrennte Frequenzbereiche durchzulassen, um gleichzeitig mehrere frequenzmultiplexierte Impulse in einem optischen Signal zu filtern, **dadurch gekennzeichnet, dass** sie außerdem Einrichtungen (20) zur Rauschunterdrückung aufweist, die sich von dem Bandpassfilter (18) unterscheiden, und dass das Bandpassfilter (18) eine geringe Modulationstiefe hat, die zwischen 10 % und 60 % der Frequenzhöhe der zu regenerierenden Impulse liegt.

2. Optische Regenerierungsvorrichtung (16) nach Anspruch 1, bei der die Modulationstiefe des Filters (18) zwischen 0,5 und 4dB, vorzugsweise zwischen 1 und 4dB liegt.

3. Optische Regenerierungsvorrichtung (16) nach einem der Ansprühe 1 bis 2, bei der die Rauschunterdrückungseinrichtungen (20) einen sättigbaren Absorber (20) zur Rauschunterdrückung einer verstärkten spontanen Emission aufweisen.

4. Optische Regenerierungsvorrichtung (16) nach einem der Ansprüche 1 bis 2, bei der die Rauschunterdrückungseinrichtungen (20) einen nichtlinearen optischen Schleifenspiegel zur Rauschunterdrückung einer verstärkten spontanen Emission aufweisen.

5.  Optische Regenerierungsvorrichtung (16) nach einem der Ansprüche 1 bis 2, bei der die Rauschunterdrückungseinrichtungen (20) eine hoch nichtlineare Faser zur Rauschunterdrückung einer verstärkten spontanen Emission aufweisen.

6.  Optische Regenerierungsvorrichtung (16) nach einem der Ansprüche 1 bis 5, bei der die Transferfunktion des Filters (18) im Wesentlichen ein Gauß'sches oder ein Sinusprofil hat.

7.  Optische Regenerierungsvorrichtung (16) nach Anspruch 6, bei dem die Frequenzbreite auf halber Höhe des Filters (18) im Wesentlichen gleich dem Doppelten der Frequenzbreite auf halber Höhe der zu regenerierenden Impulse ist.

8.  Optische Regenerierungsvorrichtung (16) nach einem der Ansprüche 1 bis 7, bei der das Filter frequenzperiodisch ist.

9.  Optische Regenerierungsvorrichtung (16) nach Anspruch 8, bei der das Filter ein Filter vom Typ Fabry-Perot ist.

10.  Optische Übertragungsanlage von Dispersions-gemanagten Solitonen-Impulsen, die Einrichtungen (10) zur Ausbreitung von optischen Impulsen aufweist, **dadurch gekennzeichnet, dass** sie eine Vorrichtung (16) zur optischen Regenerierung der Impulse nach einem der Ansprüche 1 bis 9, eingefügt in die Ausbreitungseinrichtungen (10), aufweist.

11.  Optische Übertragungsanlage nach Anspruch 10, bei der die Regenerierungsvorrichtung (16) in die Ausbreitungseinrichtungen (10) in der Nähe eines Punkts eingefügt ist, an dem die Spektralbreite der Impulse ein Maximum erreicht.

12.  Optische Übertragungsanlage nach Anspruch 11, bei der die Einrichtungen (10) zur Ausbreitung optischer Impulse erste Einrichtungen (10a) zur Ausbreitung mit anormaler Dispersion und zweite Einrichtungen (10b) zur Ausbreitung mit normaler Dispersion aufweisen, wobei die Einrichtungen (10) zur Ausbreitung optischer Impulse geeignet sind, damit die Impulse eine maximale Spektralbreite in der Nähe der Mitte der ersten Ausbreitungseinrichtungen erreichen.

13.  Verwendung einer Vorrichtung (16) nach einem der Ansprüche 1 bis 9 zur Regenerierung von Dispersions-gemanagten Solitonen-Impulsen.

D(ps / nm / Km)

D⁺

10a    16    10    12    10b    12    12

18   20

12

D⁻

50      100      Z(Km)

**Fig. 1**

$\Delta t$

50      100      Z(Km)

**Fig. 2a**

$\Delta f$

50      100      Z(Km)

**Fig. 2b**

$f_0$    $2f_0$    $3f_0$    $4f_0$    f

**Fig. 3**

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. Kumasako ; M. Matsumoto.** Linear Stability Analysis of Dispersion-Managed Solitons Controlled by Filters. *Journal of Lightwave Technology,* 08 Août 2000, vol. 18